# EUROPEAN PATENT APPLICATION

(11) **EP 1 329 365 A1**
(43) Date of publication of application: **23.07.2003**
(21) Application number: 01965566.1
(22) Date of filing: 10.09.2001
(51) Int. Cl.: B60R 21/26

(54) **GAS GENERATOR**

(30) Priority: 19.09.2000 JP 2000283039; 12.01.2001 JP 2001004766; 19.02.2001 JP 2001041224; 13.06.2001 JP 2001178154
(71) Applicant: Nippon Kayaku Kabushiki Kaisha, Tokyo 102-8172 (JP)
(72) Inventor: YOSHIDA, Masahiro, Himeji Factory, Himeji-shi, Hyogo 679-2123 (JP); ISHIDA, Takeshi, Himeji Factory, Himeji-shi, Hyogo 679-2123 (JP); KISHINO, Yoshiyuki, Himeji Factory, Himeji-shi, Hyogo 679-2123 (JP); KODAMA, Ryoi, Himeji Factory, Himeji-shi, Hyogo 679-2123 (JP); MATSUMURA, Yasushi, Himeji Factory, Himeji-shi, Hyogo 679-2123 (JP)
(74) Representative: Dronne, Guy
(86) International application number: JP0107849
(87) International publication number: WO02024493

(57) **Abstract**

A gas generator S of the present invention comprises an elongated cylindrical housing 1 closed at both ends thereof, a combustion chamber 2, formed in the housing 1 at one end portion thereof, for packing gas generant 3 that is burnt to generate high temperature gas, an igniter device 5, fixed in the housing 1 at one end thereof, for igniting and burning the gas generant 3 packed in the combustion chamber 2, a filtering member 4, inserted in the housing 1 and set at the other end portion of the housing 1, and gas discharge holes 6 formed at the other end of the housing I to communicate between an inside of the housing 1 and an outside of the same with respect to an axial direction of the housing 1.

## Description

### Technical Field

The present invention relates to a gas generator suitable for inflating an airbag, particularly for inflating an elongated hollow seatbelt (an air-belt).

### Background Art

In order to protect a vehicle occupant from the shock at a car collision, an air-belt, which is an airbag of a sort, has been developed in recent years. The air-belt is an elongated hollow seatbelt that is inflated by introducing gas therein at a car collision. This type of seatbelt is inflated by clean gas discharged from a gas generator, in common with other types of airbags. However, the gas generator used for the air-belt is required to be disposed in a limited space, such as an interior of a buckle of the seatbelt arranged in proximity to the vehicle occupant seat.

In recent years, reduction in size of the buckle of the seatbelt and improvement in design of the same have been increasingly demanded, along with which limitations have been being imposed on the shape and size of the air-belt gas generator arranged in the inner space of the buckle of the seatbelt and reduction in size of the air-belt gas generator has also been demanded.

Also, in order to meet the demand on the environment and safety, the tendency has been in recent years to shift from azide gas generant using sodium azide to gas generant using nitrogen-containing organic compound. However, since the gas generant using the nitrogen-containing organic compound is less ignitable than the azide gas generant, the gas generant using the nitrogen-containing organic compound need be increased in flammability to ignite it, as compared with the azide gas generant. Due to this, the air-belt gas generator is structured to produce an increased thermal energy of the flame from the igniter, as compared with the conventional airbag gas generator,

It is the object of the present invention to provide an air-belt gas generator suitable for inflating the elongated hollow seatbelt.

### Disclosure of the Invention

A gas generator according to the present invention (Claim 1) comprises an elongated cylindrical housing closed at one end thereof, a combustion chamber, formed in the housing at one end portion thereof, for packing gas generant that is burnt to generate high temperature gas, an igniter device, fixed in the housing at one end thereof, for igniting and burning the gas generant packed in the combustion chamber, a filtering member, inserted in the housing and set at the other end portion of the housing, and a gas discharge hole(s) formed at the other end of the housing to communicate between an inside of the housing and an outside of the same with respect to an axial direction of the housing.

In this gas generator, the gas generant packed in the combustion chamber is ignited and burnt from the one axial end of the housing by the igniter device, to generate a large amount of high temperature gas. The high temperature gas generated in the combustion chamber flows through the filtering member in the axial direction of the housing, for collection of the slag and cooling of the gas. Thereafter, the filtered gas is discharged from the gas discharge hole in the form of the clean gas. The clean gas is discharged axially from the other axial end of the housing through the gas discharge hole communicating between an inside of the housing and an outside of the same with respect to the axial direction.

As a result of this, the clean gas generated in the housing is discharged with concentration in the axial direction of the housing. This can allow the clean gas to be fed into the airbag or the elongated hollow seatbelt of the air-belt directly, without changing the gas flow at the outside of the gas generator, to inflate the airbag or the seatbelt instantaneously.

In the gas generator according to the present invention (Claim 2), the gas generant is contained in a metal cup fixed in an inner wall of the combustion chamber.

Since the gas generant is contained in the combustion chamber of the housing in the state of being packed in the metal cup, the gas generant can be protected from being contacted with moisture.

It is preferable that the gas generator according to the present invention (Claim 3) comprises diffusing means for changing a gas flow centrally running from the combustion chamber toward the filtering member.

The diffusing means can suppress the direct injection of the high temperature gas from the gas generant into the filtering member. As a result of this, the possibility of the filtering member being damaged can be suppressed.

A gas generator according to the present invention (Claim 4) comprises an elongated cylindrical housing closed at one end thereof, a combustion chamber, formed in the housing at one end portion thereof, for packing gas generant that is burnt to generate high temperature gas, an igniter device, fixed in the housing at one end thereof, for igniting and burning the gas generant packed in the combustion chamber, a gas discharge tube having a communication hole formed in the housing to communicate between an inside of the combustion chamber and an outside of the same and a gas discharge hole formed at a tip thereof, and a filtering member, provided between the gas discharge hole and the combustion chamber, to cool the high temperature gas and collect the slag contained in the high temperature gas.

In this gas generator, the gas discharge tube is separately provided at the housing. This enables the gas genenrator to be reduced in size. This also enables the air-belt to be inflated instantaneously by connecting the gas discharge tube with a gas inlet port of the air-belt.

In the gas generator according to the present invention (Claim 5), the gas discharge hole has a diameter made smaller than a diameter of the housing.

Since the gas discharge hole has a diameter made smaller than a diameter of the housing, an impulsive force of the gas generated in the combustion chamber in the housing and discharged therefrom can be increased.

In the gas generator according to the present invention (Claim 6), a baffle plate is provided on a projected plane of the filtering member at the combustion chamber side on which the communication hole is projected.

Since the baffle plate is provided on a projected plane of the filtering member on which the communication hole is projected, the need of increasing the strength of the filtering member can be eliminated. Also, the provision of the baffle plate can prevent the gas from being concentrated on the projected plane of the filtering member, and as such can allow the effective use of the entire filtering member. As a result of this, the filtering member can be allowed to have a bare minimum of thickness, and as such can provide a reduced size of the gas generator.

In the gas generator according to the present invention (Claim 7), the baffle plate has an area as large as not less than 50% of the projected plane on which the communication hole is projected.

Since the baffle plate has an area as large as not less than 50% of the projected plane on which the communication hole is projected, a portion of the filtering member corresponding to the projected plane on which the communication hole is projected, on which the high temperature gas is concentrated, can be protected from the gas when discharged. Also, this construction of the baffle plate can prevent the gas from being concentrated on the projected plane of the filtering member, and as such can allow the effective use of the entire filtering member.

In the gas generator according to the present invention (Claim 8), the baffle plate has an area equal to or larger than a projected area of the projected plane on which the communication hole is projected.

Since the baffle plate has an area equal to or larger than a projected area of the projected plane on which the communication hole is projected, a portion of the filtering member corresponding to the projected plane on which the communication hole is projected, on which the high temperature gas is concentrated, can be protected from the gas when discharged. Also, this construction of the baffle plate can prevent the gas from being concentrated on the projected plane of the filtering member, and as such can allow the effective use of the entire filtering member.

In the gas generator according to the present invention (Claim 9), the gas discharge tube is provided at the other end of the housing to be eccentric from an axis of the housing.

Since the gas discharge tube is provided at the other end of the housing to be eccentric from an axis of the housing, installation of the gas generator in the interior of the buckle of the seatbelt and the like can be facilitated. Also, the position of the gas discharge tube may be properly selected in accordance with the positional relationship between the gas discharge tube and the gas inlet port of the seatbelt.

As a result of this, when the gas generator is installed in the buckle of the seatbelt and the like, the gas discharge tube can be adapted to the shape and size of the buckle. This can facilitate the connection of the gas discharge tube to the gas inlet port of the seatbelt.

In the gas generator according to the present invention (Claim 10), the gas discharge tube is adapted to change the gas flow.

Since the gas discharge tube is adapted to change the gas flow, the gas generator may be disposed in the buckle, depending on the shape of the buckle of the seatbelt.

In the gas generator according to the present invention (Claim 11), the gas discharge tube has therein a space for the high temperature gas to pass through and has the gas discharge hole formed at a tip thereof and a second filtering member between the space and the gas discharge hole formed at the tip.

The provision of the second filtering member at the tip of the gas discharge tube enables the slag and the like contained in the gas to be collected reliably.

### Brief Description of the Drawings

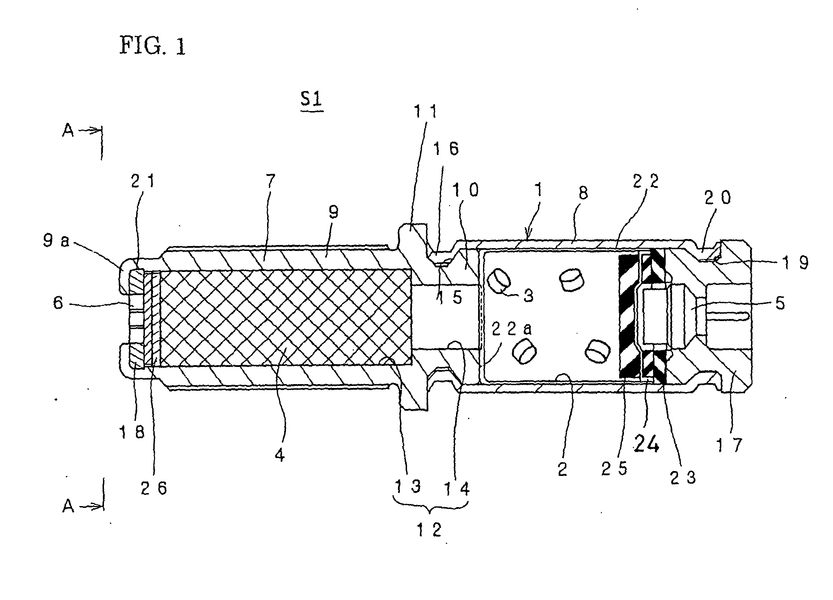

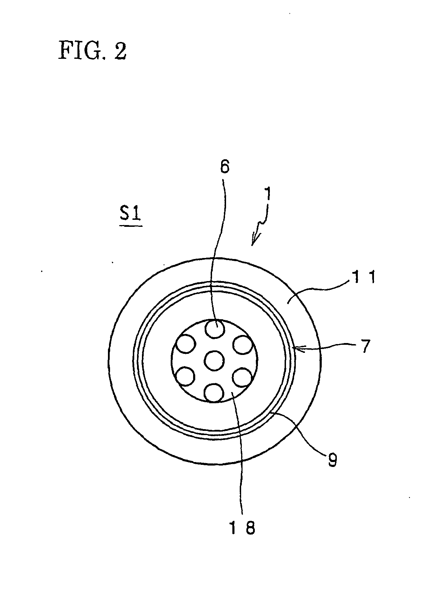

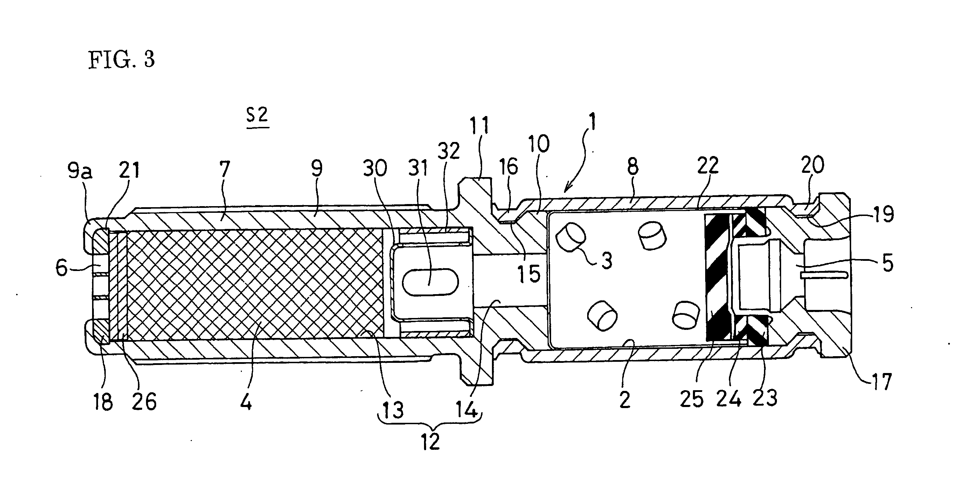

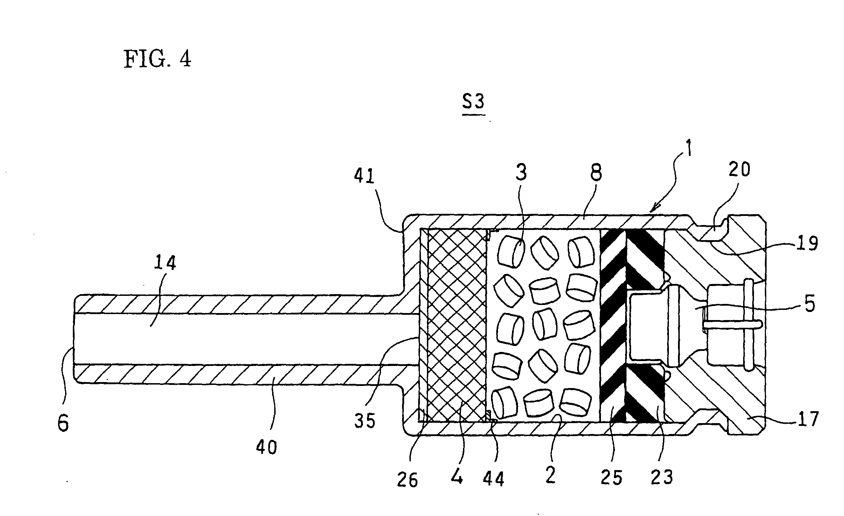

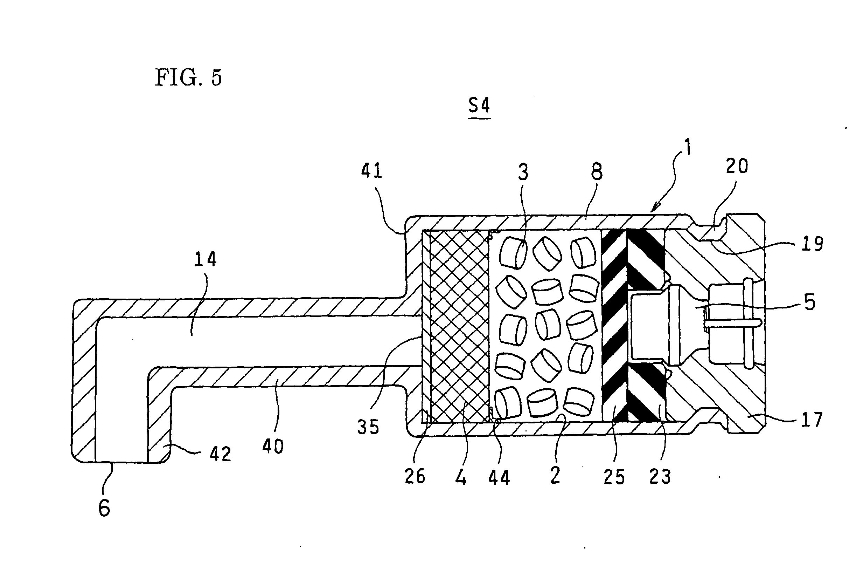

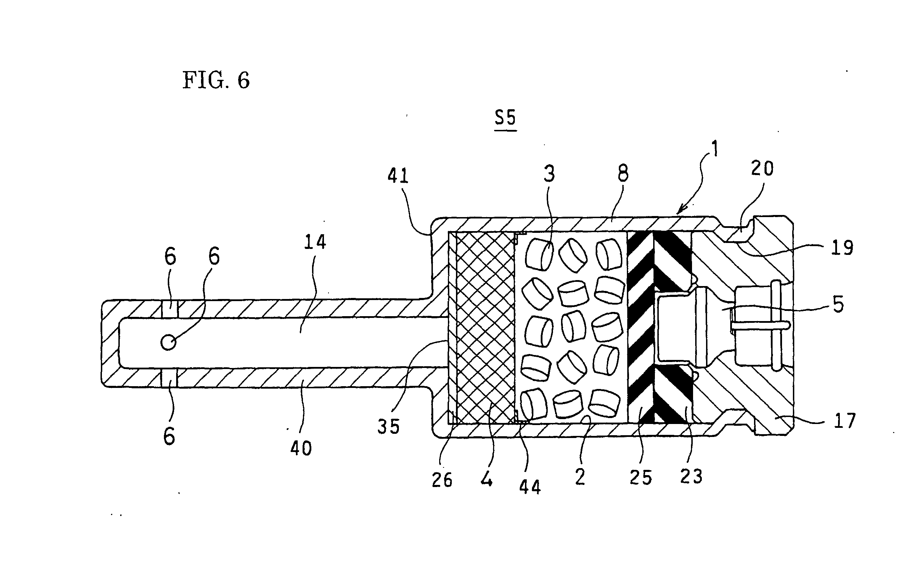

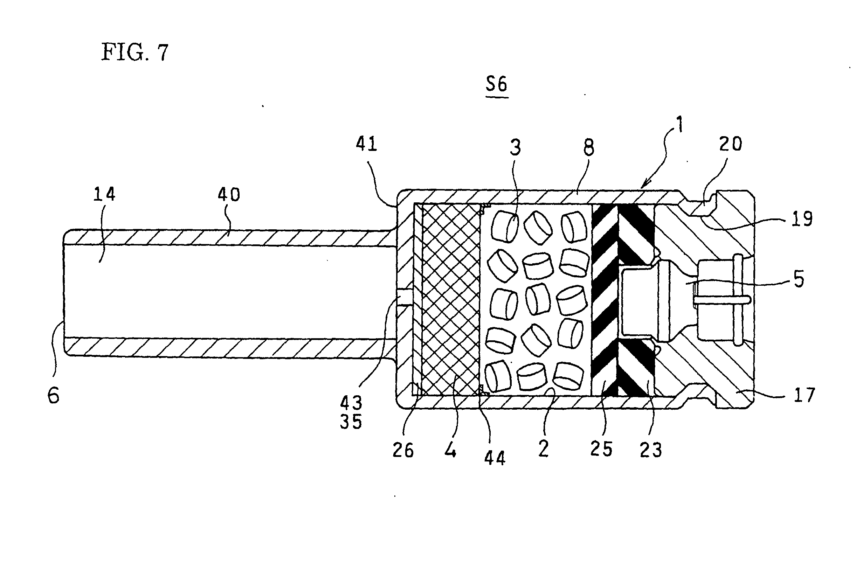

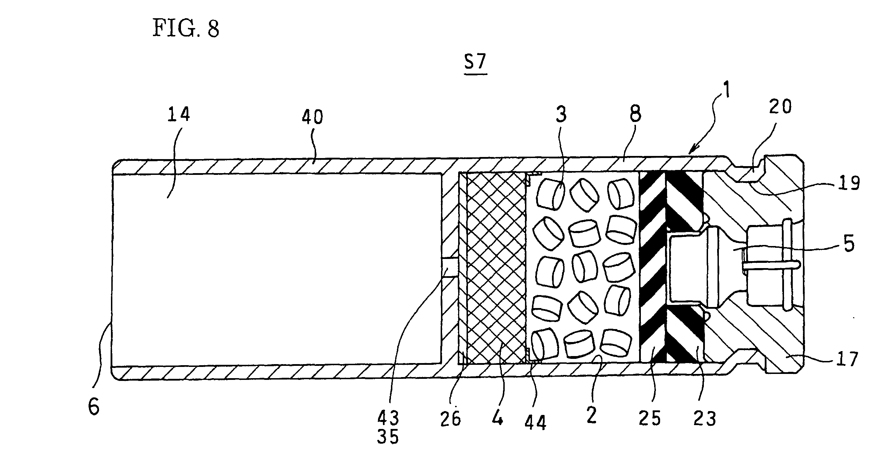

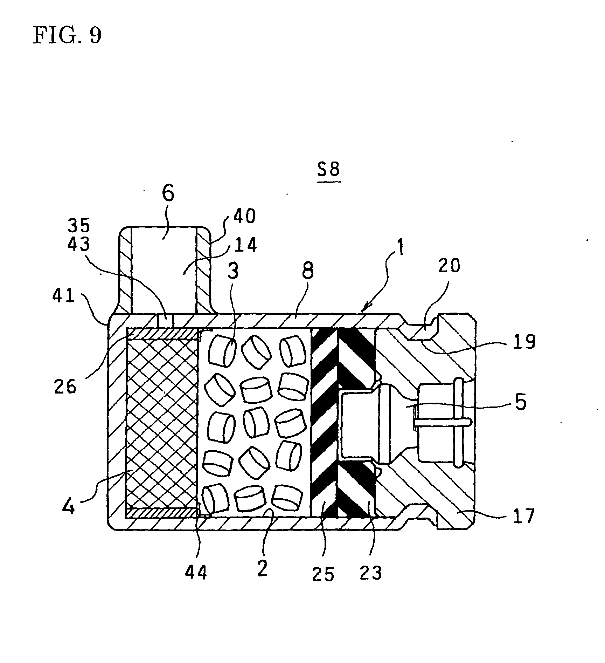

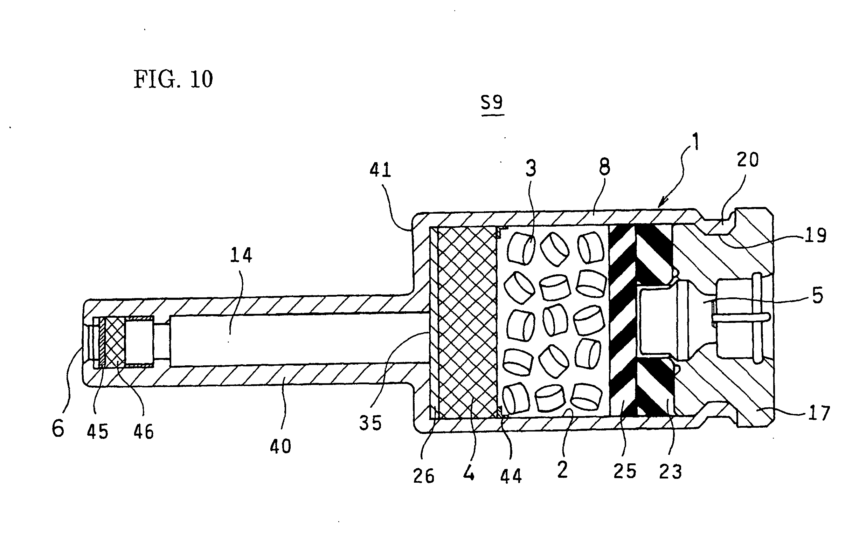

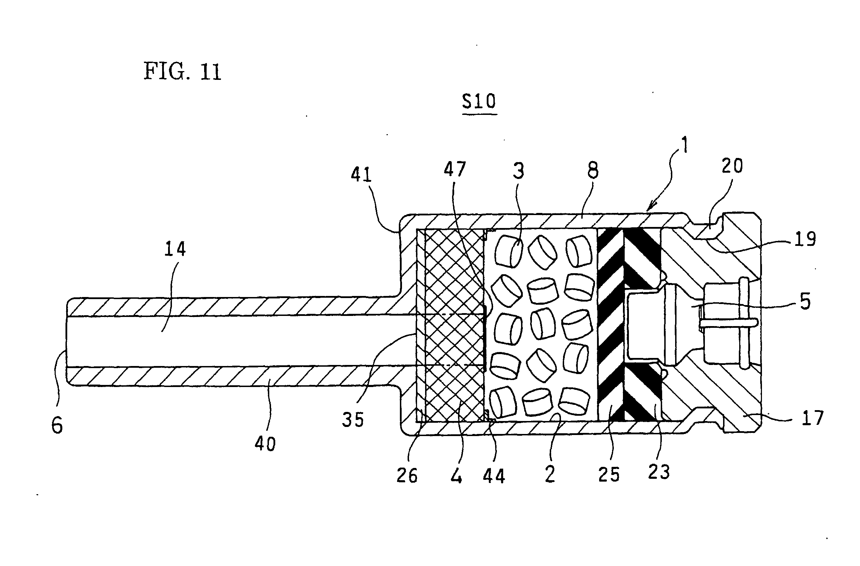

FIG. 1 is a sectional view of a gas generator of the first embodiment according to the present invention. FIG. 2 is a diagram taken along arrowed line A-A of FIG. 1. FIG. 3 is a sectional view of a gas generator of the second embodiment according to the present invention. FIG. 4 is a sectional view of a gas generator of the third embodiment according to the present invention. FIG. 5 is a sectional view of a gas generator of the fourth embodiment according to the present invention. FIG. 6 is a sectional view of a gas generator of the fifth embodiment according to the present invention. FIG. 7 is a sectional view of a gas generator of the sixth embodiment according to the present invention. FIG. 8 is a sectional view of a gas generator of the seventh embodiment according to the present invention. FIG. 9 is a sectional view of a gas generator of the eighth embodiment according to the present invention. FIG. 10 is a sectional view of a gas generator of the ninth embodiment according to the present invention. FIG. 11 is a sectional view of a gas generator of the tenth embodiment according to the present invention.

### Best Mode for Carrying out the Invention

The gas generator of the first embodiment according to the present invention will be described with reference to FIGS. 1 and 2. FIG. 1 is a sectional view of the gas generator. FIG. 2 is a diagram taken along arrowed line A-A of FIG. 1.

The gas generator S shown in FIG. 1 is mainly used for inflating a seatbelt of an air-belt. The gas generator S comprises an elongated cylindrical housing 1, a combustion chamber 2 in the housing 1, gas generants 3, a filtering member 4, an igniter 5 serving as an igniter device, and gas discharge holes 6. It is to be noted that the air-belt is an elongated hollow seatbelt that is mounted on a vehicle occupant seat and is inflated by introducing therein the clean gas discharged from the gas generator S.

As shown in FIG. 1, the housing 1 comprises an outer cylinder plug 7 and an outer cylinder 8. The outer cylinder plug 7 has a plug body 9, a plug lug 10 reduced in diameter and projecting from one axial end of the plug body 9, and a radially projecting flange 11 formed between the plug body 9 and the plug lug 10. The outer cylinder plug 7 has a stepped through-hole 12 formed to axially extend therethrough from the other axial end of the plug body 9 to an axial end of the plug lug 10. The stepped through-hole 12 comprises a fixing hole 13 opening into the other axial end of the plug body 9 and extending to a place close to the plug lug 10, and a gas passage hole 14 reduced in diameter and extending through the plug lug 10. The plug body 9 has a threaded portion, formed around the outside of the plug body 9, for engaging directly or indirectly into the seatbelt of the air-belt through piping and the like.

As shown in FIG. 1, the housing 1 is structured to have an elongated cylindrical form by inserting the plug lug 10 of the outer cylinder plug 7 into the outer cylinder 8. The outer cylinder plug 7 is fixed to the outer cylinder 8 by crimping the outer cylinder plug 7 onto the outer cylinder 8. In the crimping process, an axial end portion of the outer cylinder 8 is projected into an annular groove 15 of the plug lug 10 to form an annular projection 16. As a result of this, the outer cylinder plug 7 and the outer cylinder 8 are integrally combined with each other by engagement between the annular groove 15 and the annular projection 16.

As shown in FIG. 1, the housing 1 is closed at one end thereof (on the outer cylinder 8 side) by fixing thereto a holder 17 holding the igniter 5 and is provided with a stop plate 18 with gas discharge holes 6 fixed at the other end thereof (on the outer cylinder plug 7 side). The holder 17 is fitted in the outer cylinder 8 at an axial end portion thereof, to close the housing 1 at the end thereof by crimping the outer cylinder 8 onto the holder 17. In the crimping process, an axial end portion of the outer cylinder 8 is projected into an annular groove 19 of the holder 17 to form an annular projection 20. The stop plate 18 with the gas discharge holes 6 is inserted from an axial end of the plug body 9 into a larger diameter hole 21 forming a fixing hole 13 and then is fixed to the other end portion of the housing 1 by crimping the axial end portion 9a of the plug body 9. The gas passing through the filtering member 4 is discharged from the gas discharge holes 6 of the stop plate 18. In the crimping process, the axial end portion 9a of the plug body 9 is bent radially inwardly to crimp the stop plate 18 to a stepped portion of the larger diameter hole 21. As a result of this, the interior of the housing 1 is partitioned by the holder 17 and the stop plate 18, to form the combustion chamber 2 between the holder 17 fixed in the housing 1 at the one axial end thereof and the outer cylinder plug 7.

As shown in FIG. 1, the combustion chamber 2 in the housing 1 communicates with the fixing hole 13 in the housing 1 at the other axial end thereof via the gas passage hole 14. The gas generant 3 that generates high temperature gas by burning is packed in the combustion chamber 2. The gas generant 3 is contained in a metal cup 22 fitted in the combustion chamber to extent along an inner wall thereof. The cup 22 is formed in a cup-like shape from a thin metal, such as aluminum, and is inserted from a bottom 22a of the cup into the combustion chamber 2. The bottom 22a of the cup 22 closes the gas passage hole 14. The cup 22 serves as moisture proof of the gas generant 3 packed in the combustion chamber 2 and also serves to regulate inner pressure of the combustion chamber 2. In addition, the cup 22 serves as a burst plate which is burst when the inner pressure of the cup 22 exceeds a predetermined pressure. The gas generant 3 is covered by cushioning members 23, 24, 25 to protect the gas generant 3 from being powdered by oscillation. The cushioning members 23, 24, 25 are sequentially fitted in the space between the holder 17 and the cup 22, to prevent oscillation of the cup 22 itself. The cushioning member 25 contactable with the gas generant 3 has a cross-shaped notch to ensure that the flame spurted from the igniter 5 serving as an igniter device is transferred to the gas generant 3 without dulling and delay. The cushioning members 23-25 are preferably formed from elastic material, such as silicon rubber and silicon foam.

As shown in FIG. 1, the filtering member 4 is formed, for example, from a knitted wire sheet, a plain-woven wire sheet or an aggregation of crimped metal wire rods into a cylindrical shape to have substantially the same diameter as an inner diameter of the fixing hole 13 of the plug body 9. The filtering member 4 is fixed in the fixing hole 13 of the housing 1, so that it is placed in the housing 1 at the other axial end portion thereof. Also, the filtering member 4 abuts with a stepped portion of the fixing hole 13 at one axial end thereof on the gas passage hole 14 side and extends to a position near the stop plate 18 at the other axial end thereof. The filtering member 4 is abutted against the stepped portion of the fixing hole 13 by a plurality of expanded metals 26 interposed between the stop plate 18 and the filtering member 4. Each expanded metal 26 has a number of gas passage holes for allowing the gas to pass therethrough and functions as a spring. The expanded metals 26 may be laminated in layers.

As shown in FIG. 1, the igniter 5 serving as the igniter device is an electric igniter that is ignited when an electric current flows through it. The igniter 5 is fitted into the holder 17 from the inside of the combustion chamber 2 and fixed to the holder 17 whose end comes to be the one axial end of the housing 1. Also, the igniter 5 extends through the cushioning members 23, 24, 25 and projects toward the combustion chamber 2 to confront the cup 22. The igniter 5 is ignited when an electric current flows through it in accordance with collision signals from a collision detecting sensor, to spurt the flame into the combustion chamber 2. As a result of this, the cup 22 is melted to forcibly ignite and burn the gas generant 3 packed in the cup 22.

As shown in FIG. 1, the plurality of gas discharge holes 6 are formed in the stop plate 18 whose end comes to be the other axial end of the housing 1. The gas discharge holes 6 extend through the housing 1 in the axial direction of the housing 1 and communicate between the outside of the housing 1 and the fixing hole 13. Also, the gas discharge holes 6 are arranged at the inside of the crimped axial end portion 9a of the plug body 9 and are formed at and circumferentially about the axis of the housing 1, as shown in FIG. 2. As a substitute for the plurality of gas discharge holes 6, a single gas discharge hole may be formed at the axis of the housing.

Now, operation of the gas generator S1 will be described with reference to FIG. 1. It should be noted that the gas generator S1 shown in FIG. 1 is connected directly or indirectly with the inside of the seatbelt of the air-belt at the other axial end of the housing 1.

When the collision sensor detects automobile collision, the gas generator S1 ignites the igniter 5 by the passage of the electric current through it, as shown in FIG. 1. The flame from the igniter 5 melts the cup 22 and bursts up the cushioning member 25, first, and, then, the flame is spurted into the combustion chamber 2 to forcibly ignite and burn the gas generant 3 to thereby produce the high temperature gas. The ignition and burning of the gas generant 3 is transferred from the one axial end of the housing 1 toward the filtering member 4 sequentially.

When the combustion in the combustion chamber 2 proceeds and the inner pressure of the combustion chamber 2 rises up to a predetermined pressure, the bottom 22a of the cup 22 is burst or burnt at a break line portion thereof, to communicate the interior of the combustion chamber 2 with the filtering member 4. The high temperature gas generated in the combustion chamber 2 flows through the gas passage hole 14 and in turn the filtering member 4 in the axial direction of the housing 1, through which slag is collected and the gas is cooled to produce clean gas. After passing through the expanded metals 26, the clean gas is discharged from the gas discharge holes 6 and is fed into the seatbelt of the air-belt directly. At this time, the clean gas is discharged with concentration via the gas discharge holes 6 along the axial direction of the housing 1. As a result of this, the seatbelt of the air-belt is inflated instantaneously by the clean gas discharged from the gas discharge holes 6.

The high temperature gas generated in the combustion chamber 2 flows through the filtering member 4 along the axial direction of the housing 1, and as such displaces the filtering member 4 toward the stop plate 18 at the other end of the housing 1. If the axial end portion 9a of the plug body 9 is crimped insufficiently, the filtering member 4 may be dropped out of the housing 1. Therefore, the axial end portion 9a of the plug body is crimped so strongly that the filtering member 4 cannot be dropped out of the housing 1. In addition, the number of the gas discharge holes 6 formed and the diameter of the same are properly selected to suppress the displacement of the filtering member 4. Further, when the expanded metals 26 are pressed by the filtering member 4 displaced toward the stop plate 18, the expanded metals 26 act to limit the displacement of the filtering member 4 toward the stop plate 18, while ensuring the gas passages for the clean gas to pass through.

As just described, since the gas generator S1 of this embodiment enables the clean gas generated in the housing 1 to be discharged with concentration in the axial direction of the housing 1, the clean gas can be fed into the seatbelt of the elongated hollow seatbelt directly, without changing the flowing direction of the gas. As a result of this, the seatbelt of the air-belt can be inflated instantaneously.

Also, since the gas generator S1 enables the clean gas to be discharged with concentration in the axial direction of the housing 1, there is no need of any means for changing the flowing direction of the gas. This enables the seatbelt of the air-belt to be mounted in a narrow space of the vehicle occupant seat, thus providing reduction in space for the air-belt gas generator.

Shown in FIG. 3 is the second embodiment of the gas generator according to the present invention. The same reference characters as those in FIG. 1 or 2 refer to the corresponding members, with detailed explanation thereon omitted.

As shown in FIG. 3, the gas generator S2 of this embodiment is provided with a closed-end-cylinder-shaped inner wall 30 having holes 31 formed in the periphery thereof that serve as gas diffusion means. The inner wall 30 is fitted in the fixing hole 13 for fixing the filtering member 4 in the outer cylinder plug 7 at a portion thereof on the gas passage hole 14 side. A wire mesh 32 is disposed around the outside of the inner wall 30 in contact with the fixing hole 13. This can produce the result that the gas generated by the burning of the gas generant 3 in the combustion chamber 2 passes through the gas passage hole 14 and then passes through the holes 31 formed in the periphery of the inner wall 30. When passing through the holes 31, the gas is discharged radially from the holes 31. Then, the gas runs into the wire mesh 32 disposed in internal touch with the outer cylinder plug 7, first, and, then, runs along the axial direction of the housing 1, passing through the filtering member 4. Thereafter, the filtered gas is discharged from the gas discharge holes 6 in the form of the clean gas.

As a result of this, the high temperature and high pressure gas from the combustion chamber 2 is prevented from being spurted directly into the filtering member 4. This can prevent the filtering member 4 from being damaged by the high temperature and high pressure gas, and as such can allow the filtering member 4 to fulfill its function to collect the slag and the like.

Shown in FIG. 4 is the third embodiment of the gas generator according to the present invention. The same reference characters as those in FIGS. 1 through 3 refer to the corresponding members, with detailed explanation thereon omitted.

The gas generator S3 according to this embodiment comprises the gas generant 3 packed in the combustion chamber 2 formed at one end of the outer cylinder 8, the filtering member 4 fixed in the outer cylinder 8 at the other end thereof, the igniter 5 for igniting and burning the gas generant 3, and a gas discharge tube 40 projected toward the other end 41 of the outer cylinder 8, as shown in FIG. 4. The gas discharge tube 40 is formed by narrowing an outer diameter of the outer cylinder 8 at the other end 41 thereof. The gas discharge tube 40 is extended in parallel with an axis of the outer cylinder 8 and also extended eccentrically with respect to the axis of the outer cylinder 8. The gas discharge tube 40 is formed to have the gas passage hole 14 therein and have a gas discharge hole 6 at its tip, like a chimney. Also, the gas discharge tube 40 is provided, at a portion thereof on the combustion chamber 2 side, with a communication hole 35 to communicate between the inside of the combustion chamber 2 and the outside of the same. The filtering member 4 is provided between the gas discharge hole 6 and the combustion chamber 2 and is fixed in vicinity of the communication hole 35 at the combustion chamber 2 side in the condition in which it is pressed toward the expanded metal 26 by the expanded metal 26 and a stop plate 44. Then, after the gas generant 3 and the cushioning members 25, 23 are inserted into the combustion chamber 2 sequentially from the other end 41 side of the outer cylinder 8 (from the filtering member 4 side), the holder 17 crimped onto the igniter 5 is inserted in the combustion chamber 2. As a result of this, the gas generated by the burning of the gas generant 3 in the combustion chamber 2 passes through the filtering member 4 and then the filtered gas flows from the communication hole 35 into the gas passage hole 14 in the gas discharge tube 40 and then is discharged from the gas discharge hole 6 in the form of clean gas. When the gas passes through the gas passage hole 14, the remaining slag in the gas that was not collected by the filtering member 4 is adhesively collected via an inner wall of the gas discharge tube 40.

This can produce the result that even when the filtering member 4 is damaged by the high temperature and high pressure gas spurted from the combustion chamber 2 directly to the filtering member 4, the slag and the like can be collected by the gas discharge tube 40.

In addition, since the gas discharge tube 40 having the gas discharge hole 6 is provided eccentrically, when the gas generator is used, for example, for the air-belt or the inflatable seatbelt, the installation of the gas generator in the buckle of the seatbelt can be facilitated. It should be noted that the gas discharge tube 40 need not be provided eccentrically with respect to the axis of the outer cylinder 8. The gas discharge tube 40 may be provided coaxially with respect to the axis of the outer cylinder 8. Also, the gas discharge tube 40 may be properly formed in accordance with the configuration of the buckle of the seatbelt.

Alternatively, the gas discharge tube 40 may be bent at its tip portion 42, as the gas generator S4 of the fourth embodiment according to the present invention shown in FIG. 5. This bending of the gas discharge tube 40 enables the gas flow to be changed easily. The bending angle may be properly changed in accordance with the configuration of the seatbelt or its buckle. This enables the gas generator to be connected with the seatbelt by bending the gas discharge tube in accordance with the configuration of the seatbelt or its buckle.

Further, according to the gas generator S4 of this embodiment, the clean gas generated in the housing 1 is discharged from the gas discharge tube 40 formed in the chimney form, the clean gas can be fed into the elongated hollow seatbelt directly, without spoiling the design of the seatbelt, the buckle and the like. As a result of this, the seatbelt of the air-belt can be inflated instantaneously.

Shown in FIG. 6 is the fifth embodiment of the gas generator according to the present invention. The gas generator S5 shown in FIG. 6 is modification of the gas generator S4 shown in FIG. 4. In the gas generator S5, the gas discharge tube 40 is closed at its tip, but instead, the gas discharge holes 6 are formed circumferentially at a predetermined space around the gas discharge tube 40 at a portion thereof near the tip. As a result of the gas discharge holes 6 being circumferentially formed around the gas discharge tube 40, the gas flow is changed, so that the gas is discharged radially with respect to the gas discharge tube 40. This can provide the result that for example when this gas generator is connected with the seatbelt, the seatbelt can be uniformly inflated.

Shown in FIG. 7 is the sixth embodiment of the gas generator according to the present invention. In the gas generator S6 shown in FIG. 7, a communication hole 35 is formed in the form of an orifice having a small diameter which is formed about an axis of the outer cylinder 8 of the housing 1 at the other end 9 side and the gas discharge tube 40 is provided in which the gas passage hole 14 is provided coaxially or eccentrically with respect to the axis of the orifice 43(35). The gas generated in the combustion chamber 2 passes through the filtering member 4 and the expanded metal 26 and in turn through the orifice 43(35) and is discharged from the gas discharge hole 6 formed at the tip of the gas discharge tube 40. Since the gas passes through the orifice 43(35), the gas generated in the combustion chamber 2 can be regulated to a desired amount of discharged gas by selecting the size of the orifice 43(35).

As just described, since the gas passes through the orifice 43(35) having a reduced diameter, the gas from the combustion chamber 2 stays at the orifice 43(35) for a while, first, and, then, flows into the gas passage hole 14 in the gas discharge tube 40. This can provide an increased slag-in-gas collection rate of the filtering member 4. This enables the gas discharge tube 40 to be increased in diameter, as compared with the gas generators S3 to S5 shown in FIGS. 4 to 6. Therefore, the gas discharge tube 40 may be made equal in diameter to the outer cylinder 8 of the housing 1, as the gas generator S7 shown in FIG. 8, in addition to the gas generator S6 illustrated in this embodiment.

Shown in FIG. 9 is the eighth embodiment of the gas generator according to the present invention. The gas generator S8 shown in FIG. 9 features in that the gas discharge tube 40 is formed at the other end 41 of the outer cylinder 8 of the housing 1 so as to be parpendicular to the axis of the outer cylinder 8. The gas generator S8 according to this embodiment comprises the cup-shaped housing 1 closed at the other end 41 and the igniter 5 serving as the igniter device, fixed in the housing 1 at one end thereof, for igniting and burning the gas generant 3 in the combustion chamber 2. In the gas generator S8 according to this embodiment, the gas discharge hole 40 is oriented perpendicularly to the outer cylinder 8 and is communicated with the combustion chamber 2 through the orifice 43(35) formed in the periphery of the outer cylinder 8, as shown in FIG. 9. The ring-shaped expanded metal 26 is fixed in the combustion chamber 2 to extend along the inner wall of the housing 1 so as to cover the orifice 43(35). The filtering member 4 is fitted in around the inside of the ring-shaped expanded metal 26. The expanded metal 26 and the filtering member 4 are pressed toward the other end 41 of the housing 1 by a ring-shaped stop member 44. The ring-shaped stop member 44 also serves to prevent the gas generated in the combustion chamber 2 from flowing into the expanded metal 26 directly.

The gas generated in the combustion chamber 2 passes through the filtering member 4 and in turn through the orifice 43(35) formed in the periphery of the outer cylinder 8. Then, the filtered gas flows into the gas passage hole 14 of the gas discharge tube 40 and is discharged from the gas discharge hole 6 formed at the tip of the gas discharge tube 40. As just described, since the gas discharge tube 40 may be formed in the periphery of the outer cylinder 8 to extend perpendicularly to the axis of the outer cylinder 8, the installation of the gas generator in accordance with the configuration of the seatbelt or its buckle can be facilitated.

Shown in FIG. 10 is the ninth embodiment of the gas generator according to the present invention. The gas generator S9 shown in FIG. 10 is modification of the gas generator S3 of FIG. 4. In the gas generator S9, a filtering member 46 and an expanded metal 45 are fixed in the gas discharge tube 40 at its tip portion. As just described, as a result of the filtering member 46 being fixed in the gas discharge tube 40 at its tip portion, the gas discharged from the gas generator S9 is cooled down to an adequate temperature and also the remaining slag that was not collected by the filtering member 4 and the inner surface of the gas can be collected reliably. It should be noted that the construction wherein the filtering member 46 and the expanded metal 45 are fixed in the gas discharge tube 40 at its tip portion may be adopted in the gas generators S3 to S8 previously illustrated in FIGS. 4 to 9, as well as in the gas generator S9 shown in FIG. 10.

Additionally, the gas generator S3 of FIG. 4 may be modified, as the gas generator S 10 of the tenth embodiment according to the present invention as shown in FIG. 11, for example. Specifically, in the gas generator S3 of FIG. 4, the filtering member 4 may be provided, on a plane thereof on which the communication hole 35 is projected, with a baffle plate 47 having an area as large as not less than 50% of the projected area. The same reference characters as those in FIG. 4 refer to the corresponding members, with detailed explanation thereon omitted.

The high temperature gas generated by the burning of the gas generant 3 is apt to concentrate on the projected plane of the filtering member 4 close to the communication hole 35 when discharged from the combustion chamber, for the reason of which the filtering member 4 must be increased in strength. As a result of the baffle plate 47 being disposed on a portion of the filtering member 4 corresponding to the projected plane on which the communication hole 35 is projected, the concentration of the gas on the projected plane of the filtering member on which the communication hole 35 is projected can be prevented. Therefore, the need of increasing the strength of the filtering member 4 can be eliminated. This enables the filtering member 4 to be reduced in thickness and thus enables the gas generator S to be reduced in size.

It should be noted that the construction that the baffle plate 47 is disposed on the projected plane on which the communication hole 35 is projected may be adopted in the gas generators S6 to S9 previously illustrated in FIGS. 5 to 10, as well as in the gas generator S10 shown in FIG. 11.

It is preferable that the baffle plate 47 has an area as large as not less than 50% of the projected area of the projected plane on which the communication hole 35 is projected. It is further preferable that the baffle plate 47 has an area equal to or larger than the projected area of the projected plane on which the communication hole 35 is projected.

The gas generator according to the present invention may take other forms such as the following forms, without being limited to those illustrated in FIGS. 1 to 11.
(1) While the gas generator according to the present invention is suitably used for inflating the seatbelt of the air-belt, it can be used for inflating the airbag and for actuating the seatbelt pretensioner. When applied to this airbag or seatbelt pretensioner, the gas generator according to the present invention enables the airbag to be inflated instantaneously or the seatbelt pretensioner to be actuated instantaneously by discharging the clean gas with concentration from the gas generator in the axial direction of the housing 1.
(2) In place of the construction of the housing 1 comprising the outer cylinder plug 7, the outer cylinder 8, the holder 17 and the stop plate 18, the gas generator according to the present invention may adopt the favorable-in-strength construction of the housing 1 comprising a closed-end-cylinder-shaped outer cylinder and a holder for closing the outer cylinder at an opening side thereof. In this alternate construction, a plurality of axially perforated gas discharge holes are formed in the bottom of the outer cylinder.
(3) In place of the construction that the interior of the combustion chamber 2 is shielded from the filtering member 4 side by the bottom 22a of the cup 22, the gas generator according to the present invention may adopt the construction that the interior of the combustion chamber is shielded from the filtering member 4 side by the burst plate. In this alternate construction, it is preferable that seal rings are inserted in between the annular groove 15 and the annular projection 16 and between the annular groove 19 and the annular projection 20, respectively, for moisture proof of the gas generant 3 in the combustion chamber 2. It is also preferable that another seal ring is inserted in between the igniter 5 and the holder 17. The gas generator according to the present invention may adopt the construction that the burst plate is adhesive bonded to the stop plate 18 to close the gas discharge holes 6. When the inner pressure of the combustion chamber or the inner pressure of the entire housing 1 rises up to a predetermined pressure, the burst plate is burst to discharge the clean gas from the gas discharge holes.
(4) In place of the holes 31, serving as gas diffusion means, formed in the periphery of the inner wall 30, for changing the gas flow centrally running from the combustion chamber 2 toward the filtering member 4, the gas generator according to the present invention may adopt the construction that a mountain-shaped baffle plate opening to the filtering member 4 is provided in the inside of the inner wall 30 and also the holes are formed at the corners of the inner wall 30 on the filtering member 4 side. This type of baffle plate enables the gas flow to change from the axial direction to the circumferential direction of the inner wall 30. As a result of this, the gas can be discharged from the holes formed at the corners of the inner wall 30 on the filtering member 4 side to diffuse the gas flow.
(5) The housing 1 need not necessarily be an elongated cylinder shape. The housing 1 may have any suitable shape in section, such as an elliptical shape and a rectangular shape, so that it can be housed in the buckle of the seatbelt.
(6) The gas discharge tube 40 need not necessarily be coaxial or parallel with the axis of the outer cylinder 8. The gas discharge tube 40 may be inclined at any adequate angle.

### Capability of Exploitation in Industry

According to the gas generator of the present invention, the clean gas generated in the housing 1 can be introduced into the elongated hollow seatbelt of the air-belt directly. This can produce the result that the seatbelt of the air-belt can be inflated instantaneously. This can also produce the result that the gas generator can be reduced in size.

## Claims

1. A gas generator comprising:
an elongated cylindrical housing (1) closed at one end thereof,
a combustion chamber (2), formed in the housing (1) at one end portion thereof, for packing gas generant (3) that is burnt to generate high temperature gas,
an igniter device (5), fixed in the housing (1) at one end thereof, for igniting and burning the gas generant (3) packed in the combustion chamber (2),
a filtering member (4), inserted in the housing (1) and set at the other end portion of the housing (1), and
a gas discharge hole(s) (6) formed at the other end of the housing (1) to communicate between an inside of the housing (1) and an outside of the same with respect to an axial direction of the housing (1).

2. The gas generator according to Claim 1, wherein the gas generant (3) is contained in a metal cup (22) fixed in the combustion chamber (2).

3. The gas generator according to Claim 1 or 2, which comprises diffusing means (31) for changing a gas flow centrally running from the combustion chamber (2) toward the filtering member (4).

4. A gas generator comprising:
an elongated cylindrical housing (1) closed at one end thereof,
a combustion chamber (2), formed in the housing (1) at one end portion thereof, for packing gas generant (3) that is burnt to generate high temperature gas,
an igniter device (5), fixed in the housing (1) at one end thereof, for igniting and burning the gas generant (3) packed in the combustion chamber (2),
a gas discharge tube (40) having a communication hole (35) formed in the housing (1) to communicate between an inside of the combustion chamber (2) and an outside of the same and a gas discharge hole (6) formed at a tip thereof, and
a filtering member (4), provided between the gas discharge hole (6) and the combustion chamber (2), to cool the high temperature gas and collect the slag contained in the high temperature gas.

5. The gas generator according to Claim 1 or 4, wherein the gas discharge hole (6) has a diameter made smaller than a diameter of the housing (1).

6. The gas generator according to Claim 4, wherein a baffle plate (47) is provided on a projected plane of the filtering member (4) at the combustion chamber (2) side on which the communication hole (35) is projected.

7. The gas generator according to Claim 6, wherein the baffle plate (47) has an area as large as not less than 50% of the projected plane on which the communication hole (35) is projected.

8. The gas generator according to Claim 6, wherein the baffle plate (47) has an area equal to or larger than a projected area of the projected plane on which the communication hole (35) is projected.

9. The gas generator according to Claim 4, wherein the gas discharge tube (40) is provided at the other end (41) of the housing (1) to be eccentric from an axis of the housing (1).

10. The gas generator according to Claim 4, wherein the gas discharge tube (40) is adapted to change the gas flow.

11. The gas generator according to Claim 4, wherein the gas discharge tube (40) has therein a space for the high temperature gas to pass through and has the gas discharge hole (6) formed at a tip thereof and a second filtering member (46) between the space and the gas discharge hole formed at the tip.
